# DEMANDE DE BREVET EUROPEEN

(11) **EP 3 312 028 A1**
(43) Date de publication de la demande: **25.04.2018**
(21) Numéro de dépôt: 17196599.9
(22) Date de dépôt: 16.10.2017
(51) Int. Cl.: B60G 15/06

(54) **JAMBE DE FORCE ÉQUIPÉE DE MOYENS D'EXCENTRATION DE LA BUTÉE À BILLES**

(30) Priorité: 18.10.2016 FR 1660062
(71) Demandeur: RENAULT s.a.s., 92100 Boulogne-Billancourt (FR)
(72) Inventeur: PASSIEUX, ARNAUD, 94110 ARCUEIL (FR)

(57) **Abrégé**

L'invention concerne une jambe (12) de force destinée à équiper une suspension d'une roue (20) directrice de véhicule automobile, la jambe (12) de force comportant :
- un amortisseur (14) équipé d'une tige (18) télescopique liée à un élément (22) structurel de véhicule automobile ;
- un ressort (24) hélicoïdal enfilé autour de la tige (18) et monté contraint entre une coupelle (26) inférieure et une coupelle (28) supérieure ;
- une butée (30) à billes qui est interposée axialement entre la coupelle (28) supérieure et l'élément (22) structurel ;
- des moyens (40, 64) d'excentration pour excentrer la spire supérieure du ressort (24) par rapport à l'axe (A) de la tige (18) ;
caractérisée en ce que la butée (30) à billes est excentrée par rapport à l'axe (A) de la tige (18) par les moyens d'excentration.

## Description

### DOMAINE TECHNIQUE DE L'INVENTION

L'invention concerne une jambe de force destinée à équiper une suspension d'une roue directrice de véhicule automobile, la jambe de force comportant :
- un amortisseur équipé d'une tige télescopique dont une extrémité supérieure est destinée à être liée à un élément structurel de véhicule automobile ;
- un ressort hélicoïdal enfilé autour de la tige et monté contraint entre une coupelle inférieure et une coupelle supérieure ;
- des moyens d'excentration pour excentrer la spire supérieure du ressort par rapport à l'axe de la tige ;
- une butée à billes qui est interposée axialement entre la coupelle supérieure et l'élément structurel, la butée à billes comportant une bague fixe qui est fixée à l'élément structurel et une bague tournante qui reçoit l'effort du ressort, la butée à billes étant excentrée par rapport à l'axe de la tige par les moyens d'excentration ;
- un bloc filtrant comportant une enveloppe cylindrique extérieure et un élément filtrant intérieur, l'extrémité supérieure de la tige étant fixée à l'élément structurel par l'intermédiaire du bloc filtrant.

La présente invention concerne ainsi un nouveau moyen préventif pour éviter le tirage de direction sur véhicules automobiles équipés d'une suspension avant Mac Pherson ou pseudo Mac Pherson. Plus particulièrement elle concerne une conception avec une partie excentrique du bloc filtrant permettant, dès le montage des voitures, de passer d'une voiture "conduite à droite "à une voiture "conduite à gauche" en inversant le sens de montage de cette partie excentrique du bloc filtrant sans avoir à changer la monte des pneus ni à régler différemment les angles caractéristiques de la liaison au sol.

### ARRIERE PLAN TECHNIQUE DE L'INVENTION

La présente invention concerne les dispositifs de suspension de type Mac Pherson ou pseudo Mac Pherson montés sur les essieux directeurs des véhicules automobiles, particulièrement les jambes de force et leur rôle dans l'équilibre du système de direction.

L'intérêt de ce type de suspension est qu'il présente un nombre réduit d'éléments et un encombrement limité par rapport à d'autres systèmes. C'est pourquoi son utilisation est très développée sur les véhicules actuels, en particulier sur les véhicules de petites et moyennes dimensions.

Un problème commun à tous les véhicules est celui de la sensibilité aux efforts latéraux du fait de la chasse nécessaire à la stabilité du système de direction.

Cette sensibilité se manifeste en particulier, lorsque le véhicule roule sur une surface inclinée. Les chaussées présentent généralement une inclinaison latérale, appelée " dévers ", destinée à faciliter l'écoulement des eaux. Cette inclinaison induit une force qui tend à dévier les véhicules vers le côté le plus bas de la route, c'est à dire vers l'extérieur. Cette tendance à la déviation, appelée "tirage", en l'absence de disposition corrective, oblige le conducteur à exercer un effort sur la direction du véhicule pour maintenir une trajectoire rectiligne.

Les constructeurs de véhicules et les manufacturiers de pneumatiques tiennent compte de cette tendance lors de la définition du véhicule. C'est ainsi qu'on a conçu des épures de suspensions dissymétriques capables de compenser cette tendance. De même, certaines architectures de pneumatiques permettent de générer un léger tirage qui, s'il est orienté en sens inverse de celui occasionné par le dévers, peut minimiser ou annuler l'effort nécessaire sur le volant pour maintenir une trajectoire rectiligne.

En Europe, la grande majorité des véhicules étant destinée à rouler sur la droite de la chaussée (situation appelée roulage à droite), leur conception et/ou leur monte de pneumatiques permettent de compenser ce tirage lié au dévers moyen de la partie droite d'une chaussée. Cependant, pour des raisons économiques, cette configuration n'est, généralement, pas remise en cause dans les parties du marché (comme le Royaume-Uni) ou les véhicules circulent sur la partie gauche de la chaussée (situation appelée roulage à gauche).

Le problème du tirage lié au dévers de la chaussée devient alors plus aigu car les corrections mises en oeuvre pour compenser le tirage à droite augmentent inéluctablement la tendance au tirage à gauche. Cette situation est inconfortable pour le conducteur qui doit exercer sur le volant du véhicule un effort pour maintenir son véhicule en ligne droite.

La taille de ces marchés ne justifie cependant pas un développement spécifique d'épures dissymétriques de suspension. De même, les manufacturiers sont réticents à commercialiser localement des pneumatiques induisant un tirage inverse du fait, d'une part, de la faible demande et d'autre part, de la difficulté qu'il y a à contrôler la destination finale des produits dans un marché européen régi par la libre circulation des marchandises.

Cette situation, décrite ici à titre d'illustration, n'est pas limitée au cas du marché européen. D'autres marchés présentent la même problématique ou la problématique inverse. D'autre part, ce qui est décrit ici dans le cas (le plus aigu) de véhicules conçus et équipés pour compenser un tirage est bien entendu tout à fait valable dans le cas d'un véhicule conçu et équipé pour un comportement neutre (sur dévers nul) et qu'on veut adapter au marché du roulage à droite ou à gauche.

On a aussi proposé de résoudre ce problème en modifiant la conception du ressort de suspension. On se sert alors de ce dernier pour introduire un torseur d'effort qui va contrecarrer la tendance au tirage dans une direction.

Ainsi il existe plusieurs constructeurs qui ont deux géométries donc deux références de ressorts différentes pour le train avant, selon qu'il s'agit de voitures pour conduite à droite ou à gauche.

Sachant que pour une même famille de véhicule il existe entre 15 et 30 références de ressorts avant selon la motorisation, les options et le poids du véhicule, on peut imaginer les problèmes de conception et de logistique qui en découlent avec toutes ces références multipliées par deux.

D'autres constructeurs introduisent un peu plus de frottement dans la jambe de force pour la rendre moins sensible aux efforts de tirage, ce qui dégrade le confort vertical.

D'autres constructeurs adoptent des pneus différents et des réglages de train différents ; le choix de pneus différents multiplie également la diversité des approvisionnements.

De plus, ultérieurement, quand le client change ses pneus, ou quand les pneus s'usent, il est rarement au courant des conséquences et le tirage peut alors apparaître.

Il existe d'autres solutions qui prévoient une coupelle inférieure réglable en position. Mais elle n'a pas été utilisée de façon industrielle, et ce pour plusieurs raisons :
- elle introduit plusieurs pièces devant coopérer entre elles ce qui complique et renchérit la solution ;
- elle suppose une notion de réglage au cas par cas, alors que les constructeurs n'ont pas prévu ce genre d'opération en ligne de montage et veulent un système bon à coup sûr sans réglage pour un véhicule neuf ;
- elle ne concerne que la coupelle basse.

Or on a pu démontrer depuis par calcul que le choix du point de passage au niveau de la coupelle basse de la ligne d'action du ressort n'influence pas le tirage.

Ainsi un écart de 3 ou 4 mm de la position de l'axe du ressort en coupelle basse est sans aucune influence sur le tirage mais détériore fortement le frottement dans l'amortisseur donc le confort.

### BREF RESUME DE L'INVENTION

Avec la présente invention, plutôt que de modifier le design du ressort et/ou de la forme de ses coupelles, ce qui obligerait à multiplier le nombre de références de conception, on décale légèrement, vers l'avant ou l'arrière véhicule, la position du ressort au niveau de l'appui supérieur par rapport à l'axe de la tige d'amortisseur.

Ce décalage du haut du ressort se fait au sein de la jambe de force qui elle reste inchangée en position dans le repère véhicule.

L'invention propose ainsi une jambe de force du type décrit précédemment, caractérisée en ce que les moyens d'excentration sont interposés radialement entre la tige et la bague fixe de la butée(30) à billes.

Selon d'autres caractéristiques de la jambe de force :
- les moyens d'excentration sont fixés à l'élément structurel du véhicule ;
- l'enveloppe cylindrique du bloc filtrant est interposée radialement entre la tige et la bague fixe de la butée à billes ;
- les moyens d'excentration comportent le bloc filtrant ;
- l'enveloppe extérieure du bloc filtrant présente une face cylindrique interne excentrée par rapport à sa face cylindrique externe ;
- les moyens d'excentration comportent une bague asymétrique d'excentration qui est interposée radialement entre l'enveloppe extérieure du bloc filtrant et la bague fixe de la butée à billes ;
- l'élément filtrant présente un orifice de passage de la tige d'amortisseur qui est centré ;
- l'élément filtrant présente une forme axisymétrique ;
- le bloc filtrant est fixé à l'élément structurel par l'intermédiaire d'une bride de fixation solidaire de son enveloppe ;
- la bride de fixation du bloc filtrant est intercalée axialement directement entre la bague fixe et l'élément structurel ;
- l'élément filtrant est soumis uniquement aux efforts transitant par la tige d'amortisseur.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique de côté du véhicule équipé d'une jambe de force réalisée selon les enseignements de l'invention ;
- la figure 2 est une vue schématique de derrière de la jambe de force de la figure 1 ;
- la figure 3 est une vue de dessus de la jambe de force représentant les différentes positions susceptibles d'être occupées par l'extrémité supérieure du ressort d'amortisseur ;
- la figure 4 est une vue de détail à plus grande échelle en coupe axiale qui représente l'extrémité supérieure de la jambe de force réalisée selon un premier mode de réalisation de l'invention ;
- la figure 5 est une vue similaire à celle de la figure 4 qui qui représente l'extrémité supérieure de la jambe de force réalisée selon un deuxième mode de réalisation de l'invention.

### DESCRIPTION DETAILLEE DES FIGURES

Dans la suite de la description, on adoptera à titre non limitatif des orientations longitudinale, verticale et transversale indiquées par le trièdre "L,V,T" des figures et associé au véhicule automobile dans son ensemble. La direction verticale est utilisée à titre de repère purement géométrique comme étant une direction orthogonale à la route sur laquelle se trouve le véhicule.

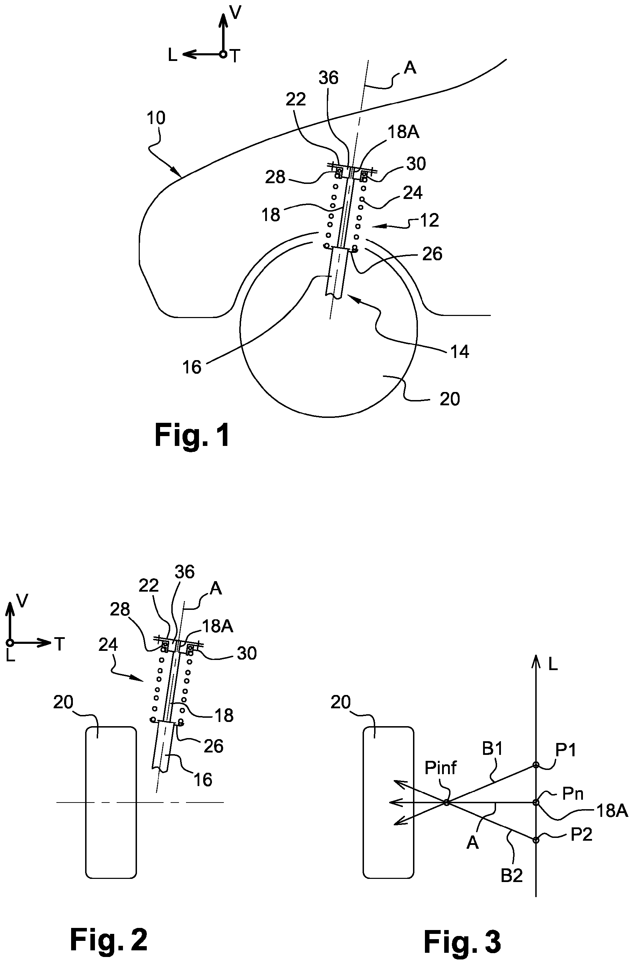

On a représenté à la figure 1 l'avant 10 d'un véhicule automobile véhicule vu de côté et la jambe de force avant gauche 12. Tout ce qui est décrit ci-après s'applique aux deux côtés du train avant du véhicule.

La jambe de force 12 comporte un amortisseur 14 d'axe "A" comprenant un corps 16 dans lequel une tige 18 est montée télescopique axialement selon l'axe "A". Une extrémité inférieure du corps 16 est liée avec une roue 20 directrice associée du véhicule, par exemple par l'intermédiaire d'une chape (non représentée), tandis que l'extrémité 18A supérieure libre de la tige 18 est destinée à être liée à un élément 22 structurel suspendu du véhicule, tel qu'un élément de carrosserie.

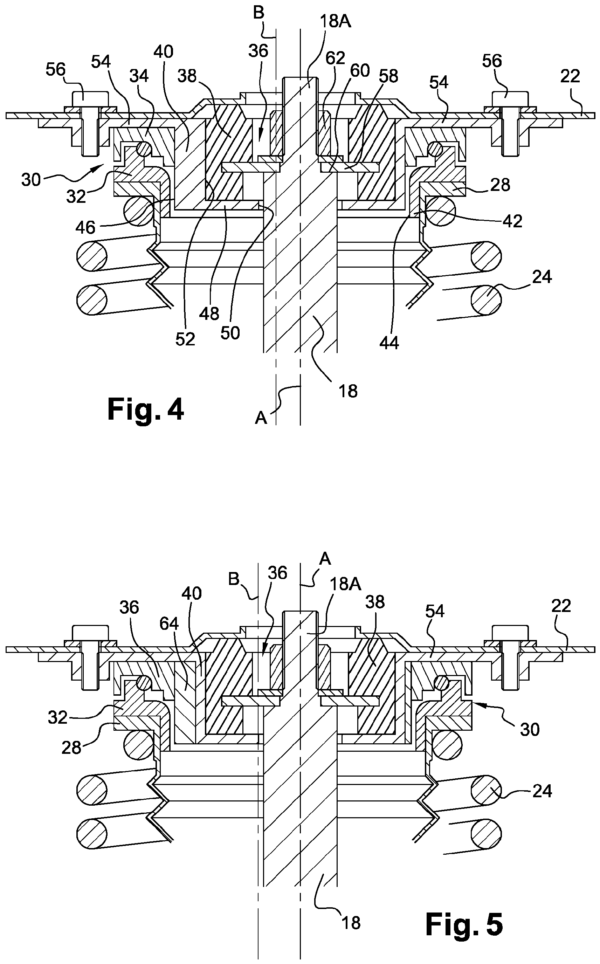

La jambe de force 12 est aussi équipée d'un ressort 24 hélicoïdal de suspension qui permet d'absorber élastiquement les chocs. Le ressort 24 présente un axe "B" central dit "axe d'action" le long duquel est dirigée la force élastique dudit ressort 24, comme cela est représenté aux figures 4 et 5. Le ressort 24 est enfilé autour de la tige 18 d'amortisseur. Le ressort 24 est monté contraint entre une coupelle 26 inférieure et une coupelle 28 supérieure. La coupelle 26 inférieure est ici fixée au corps 16 de l'amortisseur 14, tandis que la coupelle 28 supérieure est portée par l'élément 22 structurel suspendu du véhicule.

S'agissant d'une jambe de force 14 associée à une roue 20 directrice, la coupelle 28 supérieure est liée à l'élément 22 structurel par l'intermédiaire d'une butée 30 à billes. La butée 30 à billes est plus particulièrement interposée axialement entre la coupelle 28 supérieure et l'élément 22 structurel. Cette butée 30 à billes permet de faire tourner le ressort 24 de suspension par rapport à l'élément 22 structurel lors du braquage de la roue 20.

Comme cela est représenté plus en détails à la figure 4, la butée 30 à billes comporte une bague 32 inférieure qui est montée tournante dans une bague 34 supérieure fixe par rapport à l'élément 22 structurel. La bague 32 tournante reçoit ainsi l'effort du ressort 24. La bague 32 tournante est destinée à tourner de manière solidaire avec le ressort 24 de suspension autour de l'axe principal du ressort 24.

La jambe 12 de force comporte aussi un bloc filtrant 36 qui réalise la fixation de l'extrémité supérieure libre de la tige 18 sur l'élément 22 structurel suspendu. Ce bloc filtrant 36 a pour fonction d'absorber certaines vibrations de la tige 18 pour éviter qu'elles ne soient transmises à la structure du véhicule, par exemple pour éviter l'apparition de bruits parasites.

Comme cela est représenté plus en détails à la figure 4, le bloc 36 filtrant comporte principalement un élément 38 filtrant qui est porté par une enveloppe 40 rigide. L'élément 38 filtrant est par exemple réalisé en un matériau élastomère qui est apte à absorber certaines vibrations.

De manière connue, l'axe "A" de la jambe de force 12 est inclinée dans deux plans différents à la fois vers l'arrière du véhicule, d'un angle dit de "chasse", comme illustré à la figure 1, et vers le moteur d'un angle dit de "pivot", comme illustré à la figure 2.

Le ressort de suspension 24 est centré par ses coupelles inférieures 26 et supérieures 28. Comme représenté à la figure 4, la coupelle 28 supérieure présente une forme annulaire munie d'une portion tubulaire 42 de centrage en saillie vers le bas. La portion tubulaire 42 présente une épaisseur radiale constante, dont le diamètre extérieur correspond au diamètre intérieur de la spire d'extrémité supérieure du ressort 24 de suspension. Ainsi, l'extrémité supérieure du ressort 24 est positionnée de manière centrée sur la coupelle 28 supérieure.

La coupelle 28 supérieure est elle-même montée centrée sous la bague 32 tournante par l'intermédiaire de moyens de centrage. A cet effet, la bague 32 tournante présente aussi une portion 44 tubulaire qui est conformée pour être emboîtée de manière ajustée à l'intérieur de la portion 42 tubulaire de coupelle 28 supérieure.

Ainsi, l'ensemble formé par la butée 30 à billes, la coupelle 28 supérieure et le ressort 24 est centrée sur le même axe "B" d'action du ressort 24 de suspension.

Afin de corriger le tirage qui est susceptible d'apparaître en fonction du sens de circulation du véhicule, il est connu de décaler l'extrémité supérieure du ressort 24 vers l'avant ou vers l'arrière du véhicule. Le tirage est en effet influencé par l'excentration de l'axe "B" d'action du ressort 24 par rapport à l'axe "A" de la tige 18.

La figure 3 est une vue de dessus de la jambe de force 12 associée à la roue 20. On a représenté l'axe "A" de la tige 18 ainsi que l'extrémité supérieure 18A de la tige 18. On a aussi représenté par le point "Pinf" d'intersection entre un plan horizontal passant par la spire d'extrémité inférieure du ressort 24 et l'axe "A" de la tige 18. La coupelle 26 inférieure étant sensiblement centrée par rapport à la tige 18, l'axe "B" d'action du ressort 24 passe toujours par le point "Pinf".

Dans une conception neutre, c'est-à-dire dans laquelle l'effort élastique du ressort 24 de suspension n'induit aucun tirage dans la roue 20, l'axe "A" de la tige et l'axe "B" d'action du ressort 24 sont sensiblement coaxiaux. L'axe "B" d'action passe sensiblement par le milieu de la roue 20 en vue de dessus. De ce fait, l'effort élastique du ressort 24 n'induit aucun moment dans la roue 20.

Dans la présente invention on utilise un désaxage de la spire supérieure du ressort 24 longitudinalement vers l'avant ou vers l'arrière pour corriger un défaut de tirage vers la gauche ou vers la droite. La conséquence est que la ligne d'action du ressort 24 prend une orientation B1 ou une orientation B2 selon que le point d'intersection entre l'axe "B" d'action du ressort 24 et le plan horizontal passant par la spire d'extrémité supérieure du ressort 24 est décalé vers l'arrière au point "P1" ou vers l'avant au point "P2".

Ces diverses orientations possibles de l'axe d'action du ressort 24 rectifient le tirage en introduisant un couple au niveau de la roue 20.

A cette fin, l'invention propose d'agencer des moyens d'excentration pour excentrer la spire supérieure du ressort par rapport à l'axe de la tige. Les moyens d'excentration permettent d'excentrer la butée 30 à billes par rapport à l'axe "A" de la tige 18.

Les moyens d'excentration sont avantageusement fixés à l'élément 22 de structure. Ainsi, le positionnement de l'axe "B" de la spire d'extrémité supérieure du ressort 24 demeure fixe quel que soit l'orientation de la roue 20. En outre, le positionnement de l'axe "B" de la spire d'extrémité supérieure du ressort 24 demeure fixe sans risque de déplacement au cours du temps, notamment en fonction de l'usure ou des conditions d'utilisation du véhicule.

Dans le mode de réalisation représenté aux figures, l'enveloppe 40 cylindrique du bloc 36 filtrant est interposée radialement entre la tige 18 et la bague 34 fixe de la butée 30 à billes. Plus particulièrement, l'enveloppe 40 cylindrique est reçue de manière ajustée dans la bague 34 fixe. A cet effet, l'enveloppe 40 extérieure présente une face 46 externe cylindrique complémentaire de l'alésage intérieur de la bague 34 fixe. L'enveloppe 40 comporte aussi un fond 48 qui est muni d'un orifice 50 de passage de la tige 18.

Selon un premier mode de réalisation de l'invention qui est représenté à la figure 4, les moyens d'excentration comportent ici le bloc 36 filtrant. A cet effet, l'orifice 18 de passage est configuré pour permettre un passage excentré de la tige 18 par rapport à la face 46 externe de l'enveloppe 40. L'orifice 18 de passage est ici excentré par rapport à la face 46 externe de l'enveloppe 40.

Pour réduire le coût de réalisation de la jambe de force 12, il est avantageux que certains éléments soient réalisés de manière standardisée. A cet égard, il est notamment avantageux que l'élément 38 filtrant présente un orifice de passage de la tige d'amortisseur qui soit centré, par exemple l'élément 36 filtrant présente une forme axisymétrique.

Pour ce faire, l'enveloppe extérieure du bloc filtrant présente une face 52 cylindrique interne excentré par rapport à sa face 46 cylindrique externe. Ainsi, l'épaisseur radiale de l'enveloppe 40 n'est pas constante. De ce fait, l'épaisseur de l'enveloppe est minimale du côté longitudinal opposé au décalage, comme représenté à droite à la figure 2, tandis qu'elle est maximale du côté longitudinal du décalage, comme représenté à gauche à la figure 2.

En outre, le bloc 36 filtrant est fixé à l'élément 22 structurel par l'intermédiaire d'une bride 54 de fixation solidaire de son enveloppe 40. La bride 54 est ici réalisée en une seule pièce avec l'enveloppe 40. La bride 54 est formée par un rebord qui s'étend radialement depuis un bord d'extrémité supérieur de l'enveloppe 40. Elle est munie d'orifice de fixation pour recevoir des vis de fixation 56 avec l'élément 22 de structure.

La bride 54 est ici plaquée directement contre l'élément 22 structurel. Elle est plus particulièrement intercalée directement entre la bague 34 fixe de la butée 30 à billes et l'élément 22 structurel.

L'élément filtrant 38 du bloc 36 filtrant est ici fixé à l'extrémité supérieure de la tige 18 par l'intermédiaire d'une rondelle 58 qui est surmoulée dans l'élément 38 filtrant. Cette rondelle 58 s'étend ainsi dans l'orifice central de l'élément 38 filtrant de manière qu'une extrémité filetée de la tige 18 soit enfilée jusqu'à ce qu'un épaulement 60 de la tige 18 vienne en butée contre la rondelle 58. La tige 18 est ensuite fixée à la rondelle 58 au moyen d'un écrou 62 de serrage qui est reçu sur l'extrémité filetée de la tige 18.

L'élément 38 filtrant est ainsi interposé axialement uniquement entre le fond 48 de l'enveloppe 40 et l'élément 22 structurel de sorte qu'il est soumis uniquement aux efforts transitant par la tige 18 d'amortisseur via la rondelle 60. L'élément 38 filtrant ne reçoit aucun effort provenant du ressort 24.

Il est aisé d'adapter le véhicule en fonction du sens de circulation dans lequel il sera commercialisé. En effet, il suffit de faire pivoter le bloc 36 filtrant d'un demi-tour autour de l'axe "A" de la tige 18 pour obtenir le décalage dans un sens opposé. Ce pivotement est d'autant plus simple que le bloc 36 filtrant est porté par la butée 30 à billes.

Selon un deuxième mode de réalisation de l'invention qui est représenté à la figure 5, les moyens d'excentration comportent, outre le bloc filtrant, une bague 64 asymétrique d'excentration qui est interposée radialement entre la tige et la bague fixe de la butée à bille. La bague 64 d'excentration est ici interposée radialement entre l'enveloppe 40 et la bague 34 fixe. Ce mode de réalisation permet de conserver une enveloppe 40 de bloc filtrant axisymétrique présentant une épaisseur radiale constante.

L'excentration de la butée 30 à billes est procurée uniquement par la bague asymétrique qui est reçue autour de l'enveloppe 40.

Une excentration de 3 ou 4 mm de la position de l'axe du ressort 24 en coupelle 28 supérieure dans la direction avant arrière du véhicule corrige ainsi le tirage sans influence notable sur le confort.

On prévoit des moyens d'immobilisation en rotation de la bague 64 d'excentration par rapport à l'enveloppe 40, par exemple par emboîtement de formes complémentaires ou par collage.

## Revendications

1. Jambe (12) de force destinée à équiper une suspension d'une roue (20) directrice de véhicule automobile, la jambe (12) de force comportant :
- un amortisseur (14) équipé d'une tige (18) télescopique dont une extrémité (18A) supérieure est destinée à être liée à un élément (22) structurel de véhicule automobile ;
- un ressort (24) hélicoïdal enfilé autour de la tige (18) et monté contraint entre une coupelle (26) inférieure et une coupelle (28) supérieure ;
- des moyens (40, 64) d'excentration pour excentrer la spire supérieure du ressort (24) par rapport à l'axe (A) de la tige (18) ;
- une butée (30) à billes qui est interposée axialement entre la coupelle (28) supérieure et l'élément (22) structurel, la butée (30) à billes comportant une bague (34) fixe qui est fixée à l'élément (22) structurel et une bague (32) tournante qui reçoit l'effort du ressort (24), la butée (30) à billes étant excentrée par rapport à l'axe (A) de la tige (18) par les moyens d'excentration ;
- un bloc (36) filtrant comportant une enveloppe (40) cylindrique extérieure et un élément (38) filtrant intérieur, l'extrémité (18A) supérieure de la tige (18) étant fixée à l'élément (22) structurel par l'intermédiaire du bloc (36) filtrant ;
**caractérisée en ce que** les moyens d'excentration sont interposés radialement entre la tige (18) et la bague (34) fixe de la butée(30) à billes.

2. Jambe (12) de force selon la revendication précédente, **caractérisée en ce que** les moyens (40) d'excentration sont fixés à l'élément (22) structurel du véhicule.

3. Jambe (12) de force selon la revendication précédente, **caractérisée en ce que** l'enveloppe (40) cylindrique du bloc (36) filtrant est interposée radialement entre la tige (18) et la bague (34) fixe de la butée (30) à billes.

4. Jambe (12) de force selon la revendication précédente, **caractérisée en ce que** les moyens d'excentration comportent le bloc (36) filtrant.

5. Jambe (12) de force selon la revendication précédente, **caractérisée en ce que** l'enveloppe (40) extérieure du bloc (36) filtrant présente une face (52) cylindrique interne excentrée par rapport à sa face (46) cylindrique externe.

6. Jambe (12) de force selon la revendication 4, **caractérisée en ce que** les moyens d'excentration comportent une bague (64) asymétrique d'excentration qui est interposée radialement entre l'enveloppe (40) extérieure du bloc (36) filtrant et la bague (34) fixe de la butée (30) à billes.

7. Jambe (12) de force selon la revendication précédente, **caractérisée en ce que** l'élément (38) filtrant présente un orifice de passage de la tige (18) d'amortisseur qui est centré.

8. Jambe (12) de force selon la revendication précédente, **caractérisée en ce que** l'élément (38) filtrant présente une forme axisymétrique.

9. Jambe (12) de force selon l'une quelconque des revendications précédentes, **caractérisée en ce que** le bloc (36) filtrant est fixé à l'élément (22) structurel par l'intermédiaire d'une bride (54) de fixation solidaire de son enveloppe (40).

10. Jambe (12) de force selon la revendication précédente, **caractérisée en ce que** la bride (54) de fixation du bloc (36) filtrant est intercalée axialement directement entre la bague (34) fixe et l'élément (22) structurel.

11. Jambe (12) de force selon l'une quelconque des revendications précédentes, **caractérisée en ce que** l'élément (38) filtrant est soumis uniquement aux efforts transitant par la tige (18) d'amortisseur.
